# EUROPÄISCHE PATENTSCHRIFT

(11) **EP 1 521 921 B1**
(45) Veröffentlichungstag und Bekanntmachung des Hinweises auf die Patenterteilung: **01.07.2009**
(21) Anmeldenummer: 03762438.4
(22) Anmeldetag: 02.07.2003
(51) Int. Cl.: F16G 5/18

(54) **LASCHENKETTE**
SPROCKET CHAIN
CHAINE ARTICULEE

(30) Priorität: 04.07.2002 DE 10230055
(43) Veröffentlichungstag der Anmeldung: 13.04.2005
(73) Patentinhaber: LuK Lamellen und Kupplungsbau Beteiligungs KG, 77815 Bühl (DE)
(72) Erfinder: PICHURA, Michael, 77815 Bühl (DE); BAUMANN, Markus, 76689 Karlsdorf-Neuthard (DE); PENNER, Stephan, 77815 Bühl (DE); WAGNER, Uwe, 77815 Bühl (DE)
(86) Internationale Anmeldenummer: PCT/DE2003/002194
(87) Internationale Veröffentlichungsnummer: WO 2004/005752

(56) Entgegenhaltungen:
- DE-C- 4 429 223
- US-A- 4 344 761
- US-A- 4 813 918
- US-A- 5 427 583

## Beschreibung

Die Erfindung betrifft eine Laschenkette zur Kraftübertragung zwischen zwei Kegelscheibenpaaren eines Kegelscheibenumschlingungsgetriebes.

Kegelscheibenumschlingungsgetriebe mit kontinuierlich veränderbarer Übersetzung werden in Kraftfahrzeugen aus Komfort- und Verbrauchsgründen zunehmend eingesetzt. Mit solchen Kegelscheibenumschlingungsgetrieben können zwischenzeitlich auch Drehmomente von über 300 Nm übertragen werden, so dass auch Mittel- und Oberklassenwagen damit ausgerüstet sind. Mit dem Einsatz in zunehmend höherwertigen Fahrzeugen kommt gutem Akustikkomfort, d.h. insbesondere geringer Geräuschentwicklung, solcher Kegelscheibenumschlingungsgetriebe steigende Bedeutung zu.

Der DE-C-4 429 233, siehe Oberbegriff des vorliegenden Anspruchs 1, liegt die Aufgabe zugrunde, das akustische Verhalten von Kegelscheibenumschlingungsgetrieben zu verbessern, indem die regelmäßige Impulsfolge, die bei herkömmlichen Kegelscheibenumschlingungsgetrieben durch das gleichmäßige Auftreffen der Stirnflächen der Wiegedruckstüqke auf die Kegelflächen erzeugt wird, in eine "verstimmte" Impulsfolge umgewandelt wird, die zu kleineren akustischen Anregungen und entsprechend verbessertem Geräuschkomfort führt.

Die Erfinfung löst die Aufgabe dadurch, dass die Wiegedruckstücke eines Wiegedruckstückpaars unterschiedliche Längen aufweisen so wie es im Kennzeichen des Anspruchs 1 beschrieben ist, d.h. die zuerst mit den Kegelflächen eines Kegelscheibenpaars in Berührung kommenden Wiegedruckstücke jedes Wiegedruckstückpaars sind kürzer.

Weiter ist es vorteilhaft, dass die Abstände zwischen den Wiegedruckstücken und/oder Längen der Wiegedruckstücke derart unterschiedlich sind, dass sich deren Änderungsmuster längs der Länge der Laschenkette nicht wiederholt.

Zur Verminderung der Herstellkosten ist eine erfindungsgemäße Laschenkette bevorzugt derart aufgebaut, dass Wiegedruckstücke mit zwei unterschiedlichen Längen vorhanden sind, die in einem vorbestimmten Muster, das sich vorteilhafter Weise längs der Länge der Laschenkette nicht wiederholt, angeordnet sind.

Die Erfindung ist zur Anwendung an allen Arten von Laschenketten geeignet, bei denen die Stirnflächen von in Längsrichtung der Laschenkette über Laschen miteinander verbundenen Wiegedruckstücken für einen Reibeingriff mit Kegelflächen von Kegelscheibenpaaren vorgesehen sind.

Die Erfindung wird im Folgenden anhand schematischer Zeichnungen beispielsweise und mit weiteren Einzelheiten erläutert.

Es stellen dar:
- Fig. 1: eine Seitenansicht einer an sich bekannten Laschenkette,
- Fig. 2: eine schematische Draufsicht auf die Laschenkette gemäß Fig. 1,
- Fig. 3: eine Draufsicht auf einen Abschnitt einer ersten Ausführungsform einer erfindungsgemäßen Laschenkette,
- Fig. 4: eine Draufsicht auf einen Abschnitt einer zweiten Ausführungsform einer nicht erfindungsgemäßen Laschenkette,
- Fig. 5: eine Seitenansicht eines Abschnitts einer dritten Ausführungsform einer erfindungsgemäßen Laschenkette, und
- Fig. 6: Beispiele von Anordnungsmustern von Wiegedruckstücken.

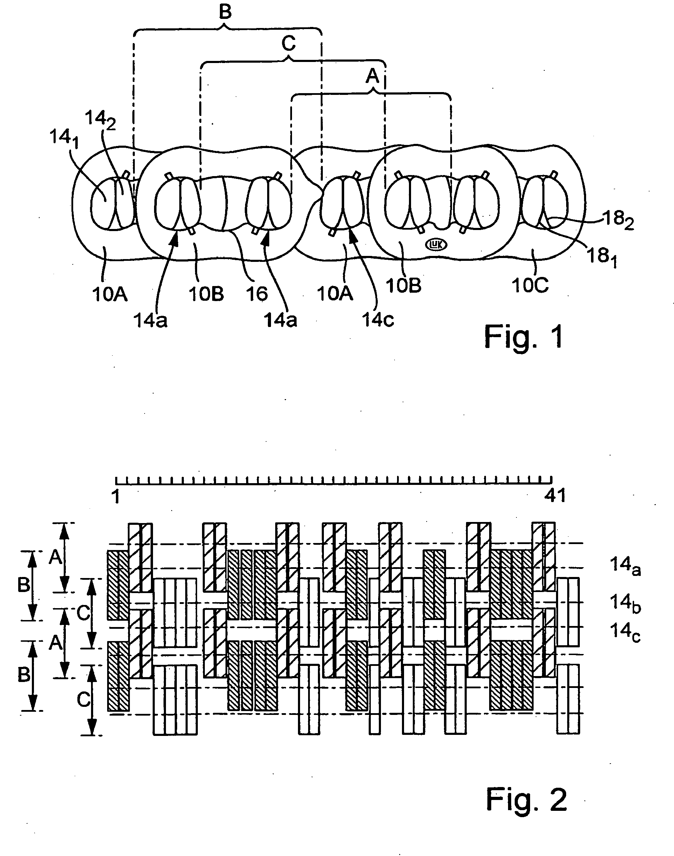

Gemäß Fig. 1 ist eine Laschenkette aus Laschen 10 und Wiegedruckstückpaaren 14 zusammengesetzt.

Gemäß Fig. 2 sind die Laschen 10 der Laschenkette in insgesamt 41 in Längsrichtung der Laschenkette verlaufenden, nebeneinander angeordneten Reihen angeordnet, wobei im dargestellten Beispiel in Querrichtung der Laschenkette gesehen, drei unterschiedliche Anordnungsmuster A, B und C vorhanden sind, die sich in Längsrichtung der Laschenkette wiederholen und in Längsrichtung versetzt zueinander angeordnet sind.

Wie aus Fig. 2 ersichtlich, verbindet ein Wiegedruckstückpaar 14a jeweils Laschen 10A der Gruppe A und 10B der Gruppe B miteinander; ein darauf folgendes Wiegedruckstückpaar 14b verbindet Laschen 10B der Gruppe B und Laschen 10C der Gruppe C miteinander; ein darauf folgendes Wiegedruckstückpaar 14C verbindet Laschen 10C der Gruppe C und 10A der Gruppe A miteinander. Anschließend wiederholt sich die Anordnung. Die Wiegedruckstückpaare 14 durchdringen jeweils in den Laschen 10 ausgebildete längliche Durchgangslöcher 16.

Gemäß Fig. 1 stützen sich die voneinander abgewandten Wiegedruckstücke 14₁ und 14₂ der Wiegedruckstückpaare 14a und 14b an den voneinander beabstandeten Innenflächen der Durchgangsöffnung ab, wohingegen die einander zugewandten Wiegedruckstücke 14₁ und 14₂ der Wiegedruckstückpaare 14a und 14b die Verbindung zu den benachbarten, in Längsrichtung der Laschenkette zur Lasche 10B versetzten Laschen 10A und 10C übernehmen. Die Wiegedruckstücke jedes Wiegedruckstückpaars 14 sind derart ausgebildet, dass ihre einander zugewandten Anlageflächen 18₁ und 18₂ sich beim Umlaufen der Laschenkette längs eines nicht dargestellten Kegelscheibenpaares aufeinander abwälzen.

Die Konstruktion und die Funktion der beschriebenen Laschenkette, die bezüglich der Anordnung der Laschen in unterschiedlichster Weise verändert werden kann, ist an sich bekannt und wird daher nicht näher erläutert. Bekannte Laschenketten sind im allgemeinen derart aufgebaut, dass alle Laschen und Wiegedruckstückpaare identisch miteinander ausgebildet sind, insbesondere die Länge der Wiegedruckstücke identisch ist, so dass deren Stirnflächen, die in Anlage an die Kegelscheiben eines Kegelscheibenpaars kommen, auf gleichem Radius umlaufen, wenn der Abstand zwischen den Kegelscheiben eines Kegelscheibenpaars nicht gerade zur Übersetzungsverstellung des Getriebes verstellt wird.

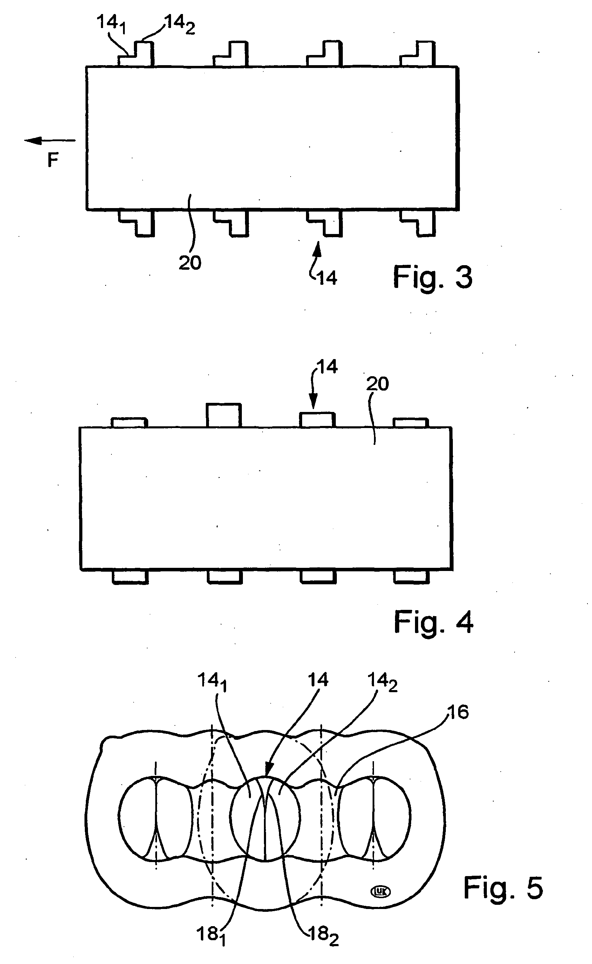

Fig. 3 stellt eine erste Ausführungsform einer erfindungsgemäßen Laschenkette schematisch dar, wobei der Bereich 20 den Gesamtverbund der Laschen darstellt, aus denen die Wiegedruckstückpaare 14 seitlich vorstehen. Im dargestellten Beispiel ist das in Laufrichtung (Pfeil F) der Laschenkette vordere Wiegedruckstück 14₁ eines Wiegedruckstückpaars 14 jeweils kürzer ausgebildet als das in Laufrichtung hintere Wiegedruckstück 14₂. Die unterschiedliche Länge ist übertrieben dargestellt. Der Längenunterschied der Wiegedruckstücke eines Wiegedruckstückpaares beträgt im Allgemeinen weniger als 1/10 mm und liegt vorzugsweise in der Größenordnung von 20µm. Mit dieser unterschiedlichen Ausbildung, die von Wiegedruckstückpaar zu Wiegedruckstückpaar variieren kann, wird erreicht, dass das in ein Kegelscheibenpaar einlaufende Wiegedruckstück 14₁ jedes Wiegedruckstückpaares, das ein Gelenk der Laschenkette bildet, sich auf einem etwas kleineren Radius der Kegelfläche abstützt als das nachlaufende Wiegedruckstück 14₂. Der beim Auftreffen der Stirnflächen der Wiegedruckstücke auf die Kegelflächen entstehende Stoßimpuls wird auf diese Weise gemildert, wodurch das akustische Verhalten des Kegelscheibenumschlingungsgetriebes verbessert wird.

Die Ausführungsform der Laschenkette gemäß Fig. 4 unterscheidet sich von der der Fig. 3 dadurch, dass die beiden nicht einzeln dargestellten Wiegedruckstücke jedes Wiegedruckstückpaares 14 gleich lang sind, jedoch die Länge der Wiegedruckstückpaare 14 unterschiedlich ist. Die Länge der Wiegedruckstückpaare 14 schwankt insgesamt um maximal etwa 0,6 mm und liegt bevorzugt zwischen 300 und 400µm, wobei der Unterschied zwischen benachbarten Wiegedruckstückpaaren bevorzugt kleiner ist als die Gesamtschwankung der Längen der Wiegedruckstückpaare. Auch mit der Anordnung gemäß Fig. 4 wird erreicht, dass die Wiegedruckstückpaare auf unterschiedlichen Radien umlaufen und das akustische Verhalten eines mit einer solchen Laschenkette ausgerüsteten Kegelscheibenumschlingungsgetriebes verbessert ist, da eine Unregelmäßigkeit der Impulse entsteht, die beim Auftreffen der Stirnflächen auf die Kegelflächen erzeugt werden.

Fig. 5 zeigt eine Seitenansicht einer Laschenkette, die insgesamt der Fig. 1 entspricht. Wie ersichtlich, sind die sich aufeinander abwälzenden Wälzflächen 18₁ und 18₂ benachbarter Wiegedruckstückpaare 14 unterschiedlich ausgebildet, so dass sich die Laschenkette beim Ablaufen an einem Kegelscheibenpaar nicht völlig gleichmäßig krümmt und eine Unregelmäßigkeit beim Ablaufen erzielt wird.

Eine weitere Möglichkeit, Unregelmäßigkeiten beim Ablaufen der Laschenkette bzw. Erzeugen der durch die Anlage der Stirnflächen der Wiegedruckkörper an den Kegelflächen erzeugten Impulse hervorzurufen, besteht darin, dass die Durchgangsöffnungen 16 der Laschen 10 mit unterschiedlichen axialen Längen derart ausgebildet werden, dass der Abstand zwischen den Wiegedruckstückpaaren 14 in Längsrichtung der Laschenkette unterschiedlich ist.

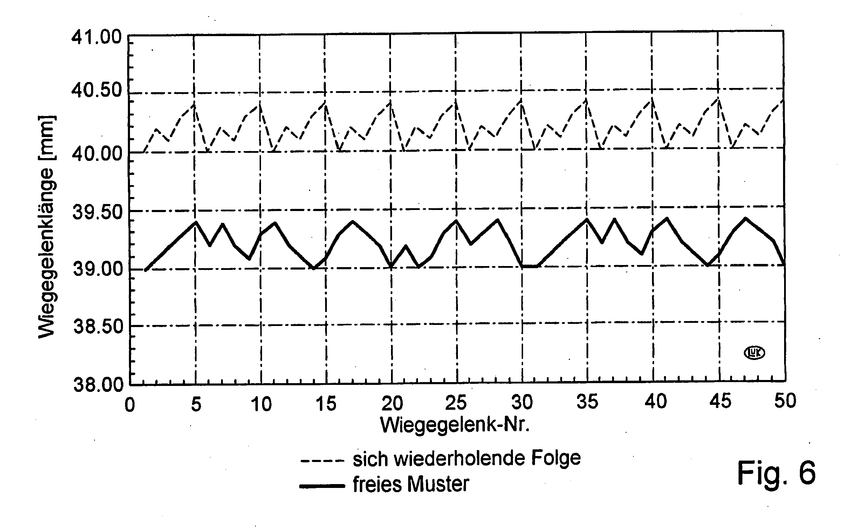

Fig. 6 zeigt zwei Folgen von Wiegegelenken bzw. Wiegedruckstückpaaren 14, wie sie in Längsrichtung der Laschenkette hintereinander angeordnet sind und in Anlage an die Kegelflächen der Kegelscheibenpaare kommen. Auf der Vertikalen ist die Länge der Wiegedruckstückpaare in mm angegeben, auf der Waagerechten sind die in Längsrichtung der Laschenkette hintereinander angeordneten Wiegedruckstückpaare gezählt.

Bei der oberen Kurve der Fig. 6 wiederholt sich das Muster der Längenänderung jeweils nach fünf Wiegegelenken; bei der unteren Kurve besteht keinerlei regelmäßige Wiederholung des Längenänderungsmusters.

In dem Beispiel der Fig. 6 werden insgesamt fünf unterschiedliche Wiegedruckstücklängen verwendet. Es versteht sich, dass auch lediglich zwei unterschiedliche Wiegedruckstücklängen verwendet und in unterschiedlicher, unregelmäßige Folge verbaut werden können. Die Verbauungsfolge richtet sich jeweils nach den Erfordernissen des jeweiligen Kegelumschlingungsgetriebes und des Fahrzeugs, in dem das Getriebe verbaut wird. Die Folge kann durch Simulationen des akustischen Systems theoretisch optimiert werden. Für das mechanische Verhalten des Getriebes ergeben sich keine Nachteile.

Die beschriebenen unterschiedlichen Ausführungsformen können miteinander kombiniert werden. Insgesamt wird die zeitliche Impulsfolge und/oder die Stärke der Impulsfolge variiert, wodurch die akustische Verbesserung erzielt wird. Die Variation kann unter stochastischen Gesichtspunkten erfolgen oder gezielt, um etwaige Resonanzen zu vermeiden. Mit der Anordnung gemäß Fig. 5 (unterschiedliche Wälzflächen bzw. Anlagewinkel der Wiegedruckstücke verschiedener Wiegedruckpaare) wird die wirksame Länge einer Lasche und damit der Laufradius der Stirnflächen der Wiegedruckstücke in den Kegelflächen verändert.

## Patentansprüche

1. Laschenkette zur Kraftübertragung zwischen Kegelscheibenpaaren eines Kegelscheibenumschlingungsgetriebes, welche Laschenkette eine Vielzahl von mehreren in Längsrichtung des Umschlingungsmittels verlaufenden, in Reihen angeordnete Laschen mit Durchgangsöffnungen und in Querrichtung der Laschenkette nebeneinander angeordnete Wiegedruckstücke enthält, die die Öffnungen der Laschen durchragen und deren Stirnseiten für einen Reibeingriff mit Kegelflächen der Kegelscheibenpaare freiliegen, wobei die Laschenkette derart ausgebildet ist, dass bei konstanter Drehzahl des Kegelscheibenpaars und konstantem Abstand zwischen den Kegelscheiben beim Auftreffen der Stirnflächen der Wiegedruckstücke auf die Kegelflächen der Kegelscheiben des Kegelscheibenpaars der zeitliche Abstand zwischen dem Auftreffen aufeinander folgender Stirnflächen auf die Kegelflächen und/oder die Stärke des Auftreffens unterschiedlich ist, wobei die Laschen der Laschenkette in in Längsrichtung der Laschenkette verlaufenden, nebeneinander angeordneten Reihen angeordnet, sind, in Querrichtung der Laschenkette gesehen, drei unterschiedliche Anordnungsmuster vorhanden sind, die sich in Längsrichtung der Laschenkette wiederholen und in Längsrichtung versetzt zueinander angeordnet sind, **dadurch gekennzeichnet, daß** die Länge der Wiegedruckstücke unterschiedlich ist, derart, daβ das vordere Wiegedruckstück eines Wiegedruckstückpaars jeweils kürzer ausgebildet ist als das in Laufrichtung hintere Wiegedruckstück.

2. Laschenketten nach Anspruch 1, **dadurch gekennzeichnet, dass** die Abstände zwischen den Wiegedruckstücken und/oder Längen der Wiegedruckstücke derart unterschiedlich sind, dass sich deren Änderungsmuster längs der Länge der Laschenkette nicht wiederholt.

3. Laschenkette nach einem der Ansprüche 1 oder 2, **dadurch gekennzeichnet, dass** Wiegedruckstücke mit zwei unterschiedlichen Längen vorhanden sind.

## Claims

1. Plate link chain for transmitting power between cone-pulley pairs of a continuously variable cone-pulley transmission, which plate link chain comprises a multiplicity of a plurality of plate links, which run in the longitudinal direction of the endless chain-belt and which are arranged in rows and which have passage openings, and cradle thrust pieces which are arranged adjacent to one another in the transverse direction of the plate link chain, which cradle thrust pieces project through the openings of the plate links and the end sides of which cradle thrust pieces are exposed for frictional engagement with conical surfaces of the cone-pulley pairs, with the plate link chain being designed such that, at a constant rotational speed of the cone-pulley pair and with a constant spacing between the cone-pulleys, as the end surfaces of the cradle thrust pieces impact against the conical surfaces of the cone-pulleys of the cone-pulley pairs, the time interval between the impacts of successive end surfaces against the conical surfaces and/or the intensity of the impact varies, with the plate links of the plate link chain being arranged in rows which run in the longitudinal direction of the plate link chain and which are arranged adjacent to one another, with three different arrangement patterns being provided as viewed in the transverse direction of the plate link chain, which arrangement patterns repeat in the longitudinal direction of the plate link chain and are arranged offset with respect to one another in the longitudinal direction, **characterized in that** the length of the cradle thrust pieces differs, in such a way that the front cradle thrust piece of a cradle thrust piece pair is designed to be shorter in each case than the cradle thrust piece which is at the rear in the running direction.

2. Plate link chain according to Claim 1, **characterized in that** the spacings between the cradle thrust pieces and/or the lengths of the cradle thrust pieces differ in such a way that the arrangement pattern thereof does not repeat along the length of the plate link chain.

3. Plate link chain according to one of Claims 1 or 2, **characterized in that** the cradle thrust pieces are provided with two different lengths.

## Revendications

1. Chaîne articulée pour le transfert de force entre des paires de poulies coniques d'une transmission à courroie à poulies coniques, laquelle chaîne articulée comprend une pluralité de maillons disposés en rangées, s'étendant dans la direction longitudinale du moyen d'enveloppement, avec des ouvertures de passage et des pièces d'appui de bascule disposées les unes à côté des autres dans la direction transversale de la chaîne articulée, qui traversent les ouvertures des maillons et libèrent leurs côtés frontaux pour un engagement par frottement avec des surfaces coniques des paires de poulies coniques, la chaîne articulée étant réalisée de telle sorte que pour une vitesse de rotation constante de la paire de poulies coniques et un espacement constant entre les poulies coniques lors de l'application des surfaces frontales des pièces d'appui de bascule sur les surfaces coniques des poulies coniques de la paire de poulies coniques, l'intervalle de temps entre l'application de surfaces frontales successives sur les surfaces coniques et/ou la force de l'application soit différent, les maillons de la chaîne articulée étant disposés en rangées juxtaposées s'étendant dans la direction longitudinale de la chaîne articulée, trois modèles d'agencement différents étant prévus, vus dans la direction transversale de la chaîne articulée, lesquels se répètent dans la direction longitudinale de la chaîne articulée et sont disposés de manière décalée dans la direction longitudinale,
**caractérisée en ce que** la longueur des pièces d'appui de bascule est différente, de telle sorte que la pièce d'appui de bascule avant d'une paire de pièces d'appui de bascule soit à chaque fois plus courte que la pièce d'appui de bascule arrière dans la direction d'avance.

2. Chaîne articulée selon la revendication 1, **caractérisée en ce que** les espaces entre les pièces d'appui de bascule et/ou les longueurs des pièces d'appui de bascule sont différentes, de telle sorte que leur modèle d'agencement ne se répète pas sur la longueur de la chaîne articulée.

3. Chaîne articulée selon l'une quelconque des revendications 1 ou 2, **caractérisée en ce que** les pièces d'appui de bascule sont prévues avec deux longueurs différentes.
